# EUROPEAN PATENT SPECIFICATION

(11) **EP 1 743 532 B1**
(45) Date of publication and mention of the grant of the patent: **06.03.2013**
(21) Application number: 05731126.8
(22) Date of filing: 21.04.2005
(51) Int. Cl.: A23L 1/39

(54) **COFFEE-BASED LIQUID MIXTURE COMPOSITION**
FLÜSSIGE MISCHUNGSZUSAMMENSETZUNG AUF KAFFEEBASIS
COMPOSITION DE MELANGE LIQUIDE A BASE DE CAFE

(30) Priority: 23.04.2004 CO 43757704
(43) Date of publication of application: 17.01.2007
(73) Proprietor: Barrera Rivera, Carlos Alberto, Bogotà, D.C. (CO)
(72) Inventor: BARRERA RIVERA, Carlos, Alberto, Bogotá, D.C. (CO); POVEDA CASTAÑEDA, Hugo, London EC2EW (GB)
(74) Representative: Carvajal y Urquijo, Isabel
(86) International application number: PCT/IB2005/001164
(87) International publication number: WO 2005/101961

(56) References cited:
- JP-A- 62 259 548
- KR-A- 2002 039 525
- KR-A- 2004 063 340
- KR-A- 2005 024 498

## Description

### ABSTRACT OF THE INVENTION

The liquid mixture of plant liquid extracts from laurel, thyme, clove, celery oregano, pepper, cayenne pepper, garlic, onion and tomato along with thickener, preserving and texturizing additives provide a liquid mixture having flavors, acid, sweet and salty, which when combined with the bitter flavor raised by the mixture of a liquid coffee extract, provides a global flavor of the final liquid mixture that is pleasant and significatively different with respect to the liquid mixtures commonly used in traditional sauces potentializing the original flavor of the cooked food to which it is added in spray or bath.

### BACKGROUND OF THE INVENTION

It is usual to prepare the food for consumption along with the aspersion or bathed in a liquid extract mixture comprising plant compounds commonly known as sauce, which is a liquid mixture made of compound that give acid, sweet and salty flavors providing a reinforcement to the global flavor of this type of foods. Such reinforcement given to the gustative properties usually lacks of the bitter flavor of the coffee which in equilibrium with the other basic flavors strengthen and provides a greater and complete satisfaction when tasted and increases the own desire for consuming the prepared and ready to consume food.

Prior art references related to the present subject matter are indicated hereinafter.

Document KR 2005024498 A discloses a process for preparing steamed pig's feet by coating pig's feet with seasoning liquid containing herbal extract, fruit juice and spices and aging in a refrigerator. Said spices in the seasoning liquid comprise corn syrup, clear stained rice wine, soy sauce, vegetable oil, sesame oil, caramel, brown sugar, red pepper seed oil, purified water, coffee, salt-fermented shrimps.

Document KR 2004063340 A discloses a method of cooking short ribs stew or pork ribs and potato soup which uses pork ribs or bones, fruit juice, bone broth, gingseng extract and spice liquid, wherein a mixture of apple, pear, pineapple and coffee (30g) is ground and heated with water and licorice root for obtaining a sauce as well a spice mixture made of garlic, ginger, onion, fermented soybean paste, black pepper, fermented soy sauce and thick fermented soy sauce.

Document KR 2002039525 A describes a process of preparing fusion food comprising noodles, meat juice and seasoning sauce, wherein the meat juice is obtained by mixing tilefish, anchovy, walleye pollack and kelp and heating, filtering, mixing with a mixture of vinegar and coffee. Said seasoning sauce is obtained by mixing red pepper powder, onion, starch sugar, sugar, soy sauce, garlic, vinegar, green onion, salt and of sesame oil.

Document JP 62259548 A discloses a caffeic food obtained from blending a drink with a caffeine-containing matter while stirring.

Document JP-A-03145430 discloses a food powder composition to be added to foods for use as an anti-inflammatory and anti-allergic agent. Said composition comprises spice, herbs, coffee beans, cacao beans, chlorella, mushroom, fruit, unfermented tea and propolis. However, it can be noted that the coffee beans in the composition of said document are present merely as an additional component.

### DETAILED DESCRIPTION OF THE INVENTION

The present invention refers to a composition of a liquid mixture of plant extracts containing a liquid coffee extract, which in appropriate amounts will provide a bitter flavor to the final liquid mixture a complete gustative and palatability satisfaction to the cooked food to which it is incorporated.

The process for obtaining the coffee-based liquid mixture for cooked food is described below.

The liquid coffee extract is obtained from an infusion made of water and roasted coffee in order to obtain a measured color in brightness degrees of around 17 and 22, and then pulverized to a particle size between 100 and 900 µm, preferably between 200 and 600 µm, after which it is subjected to an extraction through continuous filtration, until a liquid coffee extract having a concentration around 0.5 to 5 parts of soluble coffee solids to 100 parts of liquid coffee extract is obtained.

The mixture of liquid coffee extract and the remaining components of the whole liquid mixture have a proportion between 5 and 25 parts of liquid coffee extract to 100 parts of the whole liquid mixture.

An direct infusion with water and dehydrated extracts of laurel, thyme, clove, celery oregano, pepper, cayenne pepper, garlic, and onion was independently prepare at a temperature between 80 and 100°C and pulverized to a particle size between 100 and 900 µm, in order to obtain a liquid mixture having a concentration of 0.5 to 30 parts of soluble solids to each 100 parts of the total liquid mixture.

In order to stabilize, preserve and texturize the liquid mixture of plant extracts, a water-based mixture of additives in appropriate proportions was diluted.

The additive mixture is made of sucrose, acetic acid food grade, mustard flour, sodium chloride, soybean protein, starch, sodium benzoate, carboxymethylcellulose food grade and citric acid also food grade.

The plant extracts and the additives were mixed under slow and continuous stirring at a temperature between 60 and 100°C. When the final mixture had a gel appearance, the liquid coffee extract was added and the final mixture was mixed and homogenized. To the final mixture thus obtained, artificial chicken, cow, pork or fish flavoring and/or perfuming may be added in meat sauces.

The above sauce or liquid mixture was poured in a bathing way into chicken, cow, pork and fish cooked meat, cold (between 4°C and 10°C) and warm (between 50°C and 70°C). The concept of trained tasters determined that the liquid mixture enhanced in a significant and pleasant manner the global flavor of the meats to which it was added cold or warm. Furthermore, the aspect of a dark brown color and global flavor of the sauce or liquid mixture was interpreted as correct and desirable from the part of the attending panelists.

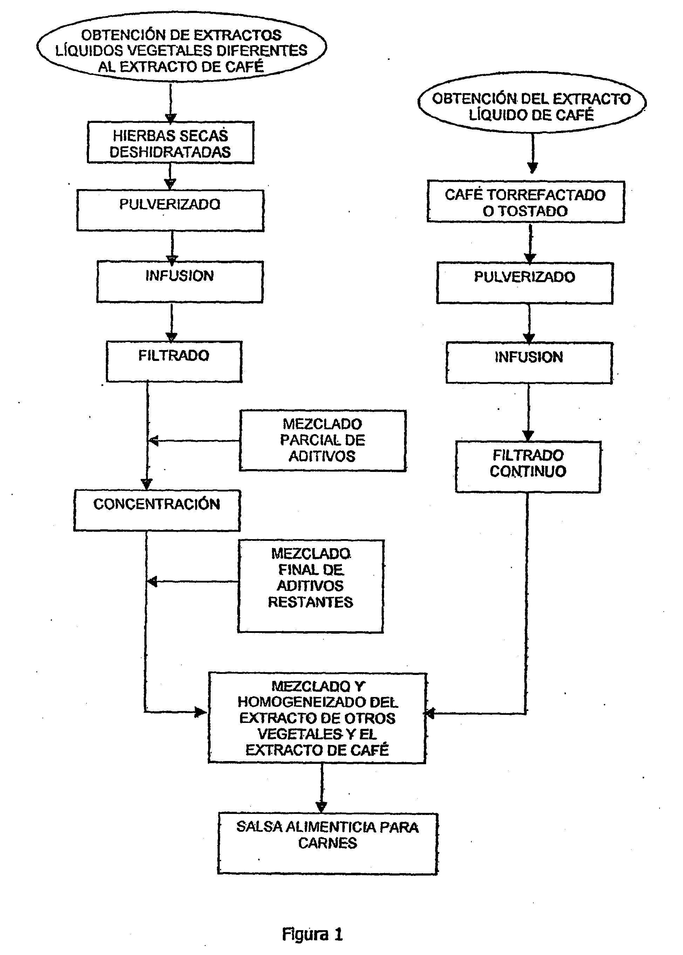

The operations for obtaining the present invention are shown in the annexed Figure 1. In Figure 1, the different plant extracts are referred as the laurel, thyme, clove, celery oregano, pepper, cayenne pepper, garlic, onion and tomato extracts.

## Claims

1. A composition of a liquid mixture comprising a liquid coffee extract; a plant liquid extract selected from laurel, thyme, clove, celery, oregano, pepper, cayenne pepper, garlic, onion and tomato, independent or mixed and an additive compound selected from sucrose, mustard flour, sodium chloride, solid soybean protein, starch, sodium benzoate, acetic acid, carboxymethylcellulose and citric acid, all food grade, alone or mixed, wherein the liquid coffee extract is present between 5 and 25 parts of liquid coffee extract to 100 parts of the whole liquid mixture.

2. The composition of the liquid mixture according to claim 1 **characterized in that** the liquid coffee extract has a concentration between 0.5 and 5 parts of soluble coffee solids.

3. The composition of the liquid mixture according to claim 1 **characterized in that** with the exception of the liquid coffee extract, the liquid mixture of the other compounds has a concentration of 0.5 to 30 parts of soluble solids to each 100 parts of the total liquid mixture.

4. The composition of the liquid mixture according to claim 1 **characterized in that** besides the liquid extracts, it comprises one or more artificial chicken, cow, pork or fish flavoring and/or aromatizing, each alone or in mixture.

5. Process for obtaining a composition of liquid mixture as defined in claim 1, **characterized in that** it comprises the following steps:
a) an infusion of water and roasted coffee is made in order to obtain a measured colour in brightness degrees of 17 to 22, and then pulverized to a particle size between 100 and 900 µm;
b) said infusion is subjected to an extraction through continuous filtration until a liquid coffee extract having a concentration of 0.5 to 5 parts of soluble coffee solids to 100 parts of liquid coffee extract is obtained;
c) a direct infusion of water and dehydrated extracts of laurel, thyme, clove, celery, oregano, pepper, cayenne, garlic, and onion is prepared at a temperature between 80 and 100 °C and pulverized to a particle size between 100 and 900 µm, in order to obtain a liquid extract with a concentration between 0.5 and 30 parts of total soluble solids to 100 parts of total infusion;
d) an additive mixture is made of sucrose, acetic acid food grade, mustard flour, sodium chloride, soybean protein, starch, sodium benzoate, carboxymethylcellulose and food grade citric acid, and diluted in water;
e) the additive mixture diluted in water and the liquid extract obtained in the step c) are mixed under slow and continuous stirring, at a temperature between 60 and 100 °C, to obtain a final mixture having a gel appearance, and
f) the liquid coffee extract of step b) is added to said final mixture of step e) and homogenized to obtain the liquid mixture.

## Patentansprüche

1. Eine Zusammensetzung einer Flüssigmischung, die ein flüssiges Kaffee-Extrakt; ein flüssiges Pflanzenextrakt, ausgewählt von Lorbeer, Thymian, Nelke, Sellerie, Oregano, Pfeffer, Paprika, Knoblauch, Zwiebel und Tomate, unabhängig voneinander oder in Mischung, und eine Zusatzstoffverbindung, ausgewählt von Saccharose, Senfmehl, Natriumchlorid, festes Sojabohnenprotein, Stärke, Natriumbenzoat, Essigsäure, Carboxymethylcellulose und Zitronensäure, alle in Nahrungsmittelqualität, umfasst, wobei der flüssige Kaffee-Extrakt zwischen 5 und 25 Teilen des flüssigen Kaffee-Extrakts zu 100 Teilen der gesamten Flüssigmischung ausmacht.

2. Die Zusammensetzung der Flüssigmischung nach Anspruch 1, **dadurch gekennzeichnet, dass** der flüssige Kaffee-Extrakt eine Konzentration zwischen 0,5 und 5 Teilen löslicher Kaffee-Feststoffe hat.

3. Die Zusammensetzung der Flüssigmischung nach Anspruch 1, **dadurch gekennzeichnet, dass** bis auf den flüssigen Kaffee-Extrakt, die Flüssigmischung der anderen Verbindungen eine Konzentration von 0,5 bis 30 Teilen löslicher Feststoffe zu jeweils 100 Teilen der gesamten Flüssigmischung hat.

4. Die Zusammensetzung der Flüssigmischung nach Anspruch 1, **dadurch gekennzeichnet, dass** diese, neben den Flüssigextrakten, ein oder mehrere künstliche Geschmacks- und/oder Aromastoffe von Geflügel, Rind, Schwein oder Fisch umfasst, jeweils einzeln oder in Mischung.

5. Verfahren zur Erhaltung einer Zusammensetzung einer Flüssigmischung nach Anspruch 1, **dadurch gekennzeichnet, dass** dasselbe folgende Schritte umfasst:
a) eine Infusion wird aus Wasser und geröstetem Kaffee hergestellt, um eine gemessene Farbe mit den Helligkeitsstufen von 17 bis 22 zu erhalten, und diese wird dann bis auf eine Teilchengröße zwischen 100 und 900 µm pulverisiert;
b) gesagte Infusion wird einer Extraktion mittels ständiger Filterung unterzogen, bis ein flüssiger Kaffee-Extrakt erhalten wird, wobei dieses eine Konzentration von 0,5 bis 5 Teilen löslicher Kaffee-Feststoffe zu 100 Teilen des flüssigen Kaffee-Extrakts hat;
c) eine direkte Infusion wird aus Wasser und entwässerten Extrakten von Lorbeer, Thymian, Nelke, Sellerie, Oregano, Pfeffer, Paprika, Knoblauch und Zwiebel bei einer Temperatur zwischen 80 und 100 °C hergestellt und bis auf eine Teilchengröße zwischen 100 und 900 µm pulverisiert, um ein Flüssigextrakt mit einer Konzentration zwischen 0,5 und 30 Teilen der gesamten löslichen Feststoffe zu 100 Teilen der gesamten Infusion zu erhalten;
d) eine Zusatzstoffmischung wird aus Saccharose, Essigsäure in Nahrungsmittelqualität, Senfmehl, Natriumchlorid, Sojabohnenprotein, Stärke, Natriumbenzoat, Carboxymethylcellulose und Zitronensäure in Nahrungsmittelqualität hergestellt und in Wasser verdünnt;
e) die in Wasser verdünnte Zusatzstoffmischung und das in Schritt c) erhaltene Flüssigextrakt werden unter langsamer und stetiger Rührung gemischt, bei einer Temperatur zwischen 60 und 100 °C, um eine endgültige Mischung mit gelartigem Aussehen zu erhalten, und
f) das flüssige Kaffee-Extrakt von Schritt b) wird der genannten endgültigen Mischung von Schritt e) zugegeben und homogenisiert, um die Flüssigmischung zu erhalten.

## Revendications

1. Composition d'un mélange liquide comprenant un extrait liquide de café ; un extrait liquide végétal choisi parmi le laurier, le thym, le clou de girofle, le céleri, l'origan, le poivre, le poivre de Cayenne, l'ail, l'oignon et la tomate, seuls ou combinés et un composé additif choisi parmi le sucrose, la farine de moutarde, le chlorure de sodium, la protéine solide du soja, l'amidon, le benzoate de sodium, l'acide acétique, la carboxyméthylcellulose et l'acide citrique, tous de qualité alimentaire, seuls ou combinés, dans laquelle l'extrait liquide de café est présent entre 5 et 25 parties d'extrait liquide de café par 100 parties du mélange liquide total.

2. La composition du mélange liquide selon la revendication 1 **caractérisée en ce que** l'extrait liquide de café a une concentration comprise entre 0,5 et 5 parties de solides solubles de café.

3. La composition du mélange liquide selon la revendication 1 **caractérisée en ce qu'**à exception de l'extrait liquide de café, le mélange liquide des autres composés a une concentration de 0,5 à 30 parties de solides solubles par chaque 100 parties du mélange liquide total.

4. La composition du mélange liquide selon la revendication 1 **caractérisée en ce qu'**en plus des extraits liquides, elle comprend un ou plusieurs arômes et assaisonnements artificiels de poulet, viande bovine, porc ou poisson, chacun seul ou en combinaison.

5. Procédé pour obtenir une composition de mélange liquide telle que définie dans la revendication 1, **caractérisé en ce que** ledit procédé comprend les étapes suivantes :
a) on prépare une infusion d'eau et café torréfié afin d'obtenir une couleur mesurée en grades d'intensité de 17 à 22, et qu'après on pulvérise en des particules de tailles comprises entre 100 et 900 µm ;
b) ladite infusion est soumisse à une extraction à travers d'une filtration en continu jusqu'à obtenir un extrait liquide de café ayant une concentration de 0,5 à 5 parties de solides solubles de café par 100 parties d'extrait liquide de café ;
c) on prépare une infusion directe d'eau et d'extraits déshydratés de laurier, thym, clou de girofle, céleri, origan, poivre, poivre de Cayenne, ail et oignions, à une température comprise entre 80 et 100 °C et pulvérisés en particules de tailles comprises entre 100 et 900 µm, afin d'obtenir un extrait liquide avec une concentration comprise entre 0,5 et 30 parties du total de solides solubles par 100 parties d'infusion totale ;
d) on prépare un mélange additif avec du sucrose, de l'acide acétique de qualité alimentaire, de la farine de moutarde, du chlorure de sodium, de la protéine du soja, d'amidon, du benzoate de sodium, de la carboxyméthylcellulose et de l'acide citrique de qualité alimentaire, et on le dilué dans de l'eau ;
e) on mixe le mélange additif dilué dans l'eau et l'extrait liquide obtenu à l'étape c) avec une agitation lente et continue, à une température comprise entre 60 et 100 °C, pour obtenir un mélange final qui ait un aspect de gel, et
f) l'extrait liquide de café de l'étape b) est ajouté au dit mélange final de l'étape e) et homogénéisé pour obtenir le mélange liquide.
